# EUROPÄISCHE PATENTSCHRIFT

(11) **EP 3 429 796 B1**
(45) Veröffentlichungstag und Bekanntmachung des Hinweises auf die Patenterteilung: **29.04.2020**
(21) Anmeldenummer: 17710510.3
(22) Anmeldetag: 07.03.2017
(51) Int. Cl.: B23K 26/08, B23K 26/38, B23K 26/70

(54) **LASERBEARBEITUNGSMASCHINE**
LASER MACHINING DEVICE
MACHINE DE TRAVAIL AU LASER

(30) Priorität: 14.03.2016 DE 102016204161
(43) Veröffentlichungstag der Anmeldung: 23.01.2019
(73) Patentinhaber: Trumpf Werkzeugmaschinen GmbH + Co. KG, 71254 Ditzingen (DE)
(72) Erfinder: MATT, Philipp, 71701 Schwieberdingen (DE); HÄBERLE, Thomas, 71665 Vaihingen/Enz (DE); JARSCH, Florian, 71254 Ditzingen (DE); RUETZ, Karsten, 71640 Ludwigsburg (DE)
(74) Vertreter: Kohler Schmid Möbus Patentanwälte
(86) Internationale Anmeldenummer: PCT/EP2017/055342
(87) Internationale Veröffentlichungsnummer: WO 2017/157725

(56) Entgegenhaltungen:
- EP-A1- 2 993 383
- EP-A2- 2 827 206

## Beschreibung

Die Erfindung betrifft eine Laserbearbeitungsmaschine
- mit einem Bearbeitungsbereich, der eine Schutzumhausung aufweist,
- mit einer in dem Bearbeitungsbereich angeordneten Laserbearbeitungsvorrichtung, mittels derer an einer Bearbeitungsstelle ein in dem Bearbeitungsbereich angeordnetes Werkstück unter Emission von Laserstrahlung bearbeitbar ist, gegen welche die Umgebung des Bearbeitungsbereichs mittels der Schutzumhausung abgeschirmt ist, wobei durch die Bearbeitung des Werkstücks ein Bearbeitungsprodukt erzeugbar ist, das in einer Ausschleusrichtung bewegbar und dadurch aus der Schutzumhausung abführbar ist, indem die Schutzumhausung eine Begrenzung aufweist, die in der Ausschleusrichtung nachgiebig und dadurch von dem in der Ausschleusrichtung bewegten Bearbeitungsprodukt passierbar ist sowie
- mit einer Produktablage zum Lagern des Bearbeitungsprodukts, die in vertikaler Richtung unterhalb der Bearbeitungsstelle angeordnet ist und die sich in der Ausschleusrichtung erstreckt,

Eine derartige Laserbearbeitungsmaschine wird von der Firma TRUMPF Werkzeugmaschinen GmbH + Co. KG, Johann-Maus-Straße 2, 71254 Ditzingen, Deutschland unter der Bezeichnung "TruLaser Tube 7000" angeboten (druckschriftlich offenbart in der Firmenbroschüre "TruLaser Tube: Shape the future." der TRUMPF Werkzeugmaschinen GmbH + Co. KG, Ditzingen 2013). Eine derartige Maschine (siehe auch die EP-A-2827206) dient zur schneidenden Bearbeitung von Rohren mittels Laser. Die schneidende Rohrbearbeitung wird in einem Arbeitsraum der Maschine durchgeführt, der mit einer Schutzkabine versehen ist. Die Schutzkabine dient insbesondere zur Abschirmung der Umgebung der Maschine gegen Laserstrahlung, die während eines Bearbeitungsprozesses im Innern des Arbeitsraums an einer Bearbeitungsstelle emittiert wird. Durch eine Öffnung in der Wand der Schutzkabine wird ein zu bearbeitendes Rohr in axialer Richtung in das Innere des Arbeitsraums vorgeschoben. Rohrabschnitte, die durch schneidende Bearbeitung im Innern des Arbeitsraums erzeugt worden sind, werden in einer senkrecht zu der axialen Vorschubrichtung verlaufenden Ausschleusrichtung aus dem Arbeitsraum abgeführt. Nach dem finalen Trennschnitt gelangen die Rohrabschnitte dabei zunächst unter Schwerkraftwirkung auf eine unterhalb der Bearbeitungsstelle angeordnete Ausschleusschräge. Über die Ausschleusschräge verlassen die Rohrabschnitte den Arbeitsraum durch eine in der Ausschleusrichtung gelegene und als Ausschleusöffnung dienende Wandöffnung der Schutzkabine. Um ein Austreten von Laserstrahlung an der Ausschleusöffnung der Schutzkabine zu verhindern, ist die Ausschleusöffnung mit einem in der Ausschleusrichtung nachgiebigen und folglich von den Rohrabschnitten passierbaren Schutzvorhang versehen. An die Ausschleusschräge und den Ausschleusvorhang an der Wand der Schutzkabine schließt sich in der Ausschleusrichtung eine horizontale Produktablage an, auf welcher die zuvor erstellten Rohrabschnitte bis zum Entladen der Produktablage zwischengelagert werden.
Aufgabe der vorliegenden Erfindung ist eine Optimierung der Abschirmung der Umgebung einer Laserbearbeitungsmaschine der eingangs genannten Art gegen Laserstrahlung aus dem Bearbeitungsbereich der Maschine.
Erfindungsgemäß gelöst wird diese Aufgabe durch die Laserbearbeitungsmaschine nach Patentanspruch 1.
An der erfindungsgemäßen Laserbearbeitungsmaschine ist der Ort, an welchem ein in dem Bearbeitungsbereich der Maschine mittels Laserstrahlung erzeugtes Bearbeitungsprodukt die Schutzumhausung des Bearbeitungsbereichs verlässt, sowohl in vertikaler Richtung als auch in der Ausschleusrichtung deutlich gegenüber dem Ort der Emission der Laserstrahlung versetzt. Aufgrund dieses Versatzes erreicht allenfalls ein verhältnismäßig geringer Teil der an der Bearbeitungsstelle emittierten Laserstrahlung die von den abzuführenden Bearbeitungsprodukten passierte und in der Ausschleusrichtung nachgiebige Begrenzung der Schutzumhausung. An der Entladeseite der erfindungsgemäßen Laserbearbeitungsmaschine ist deren Umgebung folglich besonders sicher gegen Laserstrahlung aus dem Bearbeitungsbereich der Maschine abgeschirmt. Insbesondere an Laserbearbeitungsmaschinen zur schneidenden Rohrbearbeitung kann die Ausschleusrichtung senkrecht zu einer Vorschubrichtung verlaufen, in welcher ein zu bearbeitendes Rohr dem Bearbeitungsbereich der Maschine zugeführt wird. Die Produktablage kann horizontal ausgerichtet, aber auch gegen die Horizontale geneigt sein. Auf der Produktablage werden die Bearbeitungsprodukte in der Regel vorübergehend abgelegt. Es ist denkbar, dass zwischen dem Ort der Erzeugung der Bearbeitungsprodukte und der Produktablage eine Transfereinrichtung vorgesehen ist, mittels derer die Bearbeitungsprodukte der Produktablage zugeführt werden. Als Transfereinrichtung in Frage kommt beispielsweise eine Schräge, über welche die Bearbeitungsprodukte insbesondere unter Schwerkraftwirkung zu der Produktablage gelangen können. Die in der Ausschleusrichtung nachgiebige Begrenzung der Schutzumhausung ist bevorzugtermaßen nach Art eines Laserschutzvorhangs ausgebildet.

Besondere Ausführungsarten der Erfindung nach Patentanspruch 1 ergeben sich aus den abhängigen Patentansprüchen 2 bis 15.

An der Laserbearbeitungsmaschine gemäß Patentanspruch 2 erweitert sich die Schutzumhausung in der Ausschleusrichtung stufenartig. Die in der Ausschleusrichtung nachgiebige Begrenzung ist an einer ablageseitigen Stufe der Schutz-umhausung und dort an einem Stufenteil vorgesehen, der senkrecht zu der von der Erweiterung der Schutzumhausung übergriffenen Produktablage verläuft. Aufgrund der Stufenform kann die Schutzumhausung an ihrer Innenseite eine Ausbreitung der in dem Bearbeitungsbereich der Maschine generierten Laserstrahlung zu der Austrittsöffnung der Schutzumhausung besonders wirksam blockieren. Bei entsprechender Gestaltung der treppenartigen Schutzumhausung ist gänzlich ausgeschlossen, dass an der Bearbeitungsstelle emittierte Laserstrahlung die Austrittsöffnung der Schutzumhausung auf direktem Wege erreicht.

Die erfindungsgemäße Laserbearbeitungsmaschine nach Patentanspruch 3 zeichnet sich durch eine mehrlagige Ausführung der in der Ausschleusrichtung nachgiebigen Begrenzung der Schutzumhausung aus. Wenigstens zwei Begrenzungselemente der mehrlagigen Begrenzung erstrecken sich senkrecht zu der Ausschleusrichtung und sind in der Ausschleusrichtung gegeneinander versetzt. Aufgrund des gegenseitigen Versatzes der Begrenzungselemente kann sichergestellt werden, dass Bearbeitungsprodukte, die sich in der Ausschleusrichtung bewegen, die einzelnen Begrenzungselemente nacheinander passieren. Wird ein Begrenzungselement aufgrund der Passage eines Bearbeitungsprodukts in eine Stellung ausgelenkt, aufgrund derer die Abschirmungswirkung des Bearbeitungselements reduziert ist, kann wenigstens ein Begrenzungselement, das in der Ausschleusrichtung oder entgegen der Ausschleusrichtung auf das ausgelenkte Begrenzungselement folgt, eine Ausrichtung beibehalten, bei welcher es die ihm zugedachte Abschirmungswirkung maximal entfalten kann. Es ergibt sich ein Schleuseneffekt, aufgrund dessen Bearbeitungsprodukte hauptzeitparallel durch die in der Ausschleusrichtung nachgiebige Begrenzung aus der Schutzumhausung abgeführt werden können.

Einander unmittelbar benachbarte Begrenzungselemente sind zu einer Abschirmung in der beschriebenen Weise in der Lage, wenn wenigstens zwei der Begrenzungselemente der in der Ausschleusrichtung nachgiebigen Begrenzung der Schutzumhausung in der Ausschleusrichtung einen gegenseitigen Abstand aufweisen, der ebenso groß ist oder größer als die Abmessung, welche das in der Ausschleusrichtung bewegte Bearbeitungsprodukt in der Ausschleusrichtung aufweist (Patentanspruch 4).

Als Begrenzungselemente werden erfindungsgemäß Strahlschutzvorhänge bevorzugt, die in mehreren in der Ausschleusrichtung gegeneinander versetzten Ebenen angeordnet sind. Als Material für die Strahlschutzvorhänge bietet sich ein Gummimaterial an, das einerseits über ausreichende Reißfestigkeit, selbstverlöschende Eigenschaften und Beständigkeit gegen Laserbeschuss verfügt, andererseits aber auch ausreichend elastisch und biegbar ist, damit der von den Bearbeitungsprodukten in der Ausschleusrichtung ausgeführten Bewegung kein nennenswerter Widerstand entgegengesetzt wird. Setzen die Strahlschutzvorhänge auf der Produktablage auf, so sorgen entsprechend niedrige Reibwerte dafür, dass die Nachgiebigkeit der Schutzvorhänge in der Ausschleusrichtung nicht durch Reibung beeinträchtigt wird, die bei relativ zu der Produktablage in der Ausschleusrichtung ausgeführten Bewegungen der Schutzvorhänge auftritt.

An der erfindungsgemäßen Laserbearbeitungsmaschine gemäß Patentanspruch 5 kann das Abschirmungsverhalten der Begrenzungselemente einer mehrlagigen nachgiebigen Begrenzung der Schutzumhausung an wechselnde Bedürfnisse, beispielsweise an wechselnde Abmessungen der aus der Schutzumhausung abzuführenden Bearbeitungsprodukte angepasst werden, indem wenigstens zwei der Begrenzungselemente in der Ausschleusrichtung relativ zueinander zustellbar sind.

Die Wirksamkeit der Abschirmung der Umgebung gegen Laserstrahlung aus dem Bearbeitungsbereich der Laserbearbeitungsmaschine durch die in der Auschleusrichtung nachgiebige Begrenzung der Schutzumhausung hängt unter anderem von der Ausrichtung ab, mit welcher die aus der Schutzumhausung abzuführenden Bearbeitungsprodukte gegenüber der nachgiebigen Begrenzung angeordnet sind. Je nach Ausrichtung der Bearbeitungsprodukte gegenüber der nachgiebigen Begrenzung verkürzt oder verlängert sich die Zeit, welche die Bearbeitungsprodukte für das Passieren der nachgiebigen Begrenzung benötigen und während derer die nachgiebige Begrenzung aus derjenigen Position ausgelenkt ist, in welcher sie eine maximale Abschirmungswirkung entfaltet. An mehrlagigen nachgiebigen Begrenzungen der Schutzumhausung ist die Ausrichtung der aus der Schutzumhausung abzuführenden Bearbeitungsprodukte zudem maßgebend dafür, ob das Bearbeitungsprodukt bei Verlassen der Schutzumhausung Begrenzungselemente der mehrlagigen Begrenzung nacheinander oder gleichzeitig passiert und dabei auslenkt.

Vor diesem Hintergrund ist in weiterer bevorzugter Ausgestaltung der erfindungsgemäßen Laserbearbeitungsmaschine eine Justiervorrichtung vorgesehen, die an der in Gegenrichtung der Ausschleusrichtung gelegenen Seite der nachgiebigen Begrenzung bzw. der Begrenzungselemente der nachgiebigen Begrenzung angeordnet ist und welche in der Ausschleusrichtung bewegte Bearbeitungsprodukte in zweckmäßiger Weise gegenüber der nachgiebigen Begrenzung bzw. den Begrenzungselementen der nachgiebigen Begrenzung ausrichtet (Patentansprüche 6, 7).

Verlaufen Begrenzungselemente einer mehrlagigen nachgiebigen Begrenzung der Schutzumhausung parallel zueinander senkrecht zu der Ausschleusrichtung, so sorgt die Justiervorrichtung in Weiterbildung der erfindungsgemäßen Laserbearbeitungsmaschine dafür, dass die in der Ausschleusrichtung bewegten Bearbeitungsprodukte parallel zu den Begrenzungselementen ausgerichtet werden (Patentanspruch 8).

Als konstruktiv einfache und dennoch funktionssichere Justiervorrichtung wird erfindungsgemäß eine schiefe Ebene bevorzugt, die sich in der Ausschleusrichtung erstreckt und dabei in vertikaler Richtung den Zwischenraum zwischen der Produktablage und einem Bearbeitungsniveau überbrückt, auf welchem ein Bearbeitungsprodukt bei der Erzeugung angeordnet ist (Patentanspruch 9).

Durch eine besonders funktionssichere Abfuhr von Bearbeitungsprodukten aus der Schutzumhausung des Bearbeitungsbereichs zeichnet sich die Erfindungsbauart gemäß Patentanspruch 10 aus, im Falle derer die von der Erweiterung der Schutzumhausung übergriffene Produktablage in der Ausschleusrichtung antreibbar ist und folglich dazu genutzt werden kann, Bearbeitungsprodukte unter Passieren der in der Ausschleusrichtung nachgiebigen Begrenzung der Schutzumhausung aus dem Inneren der Schutzumhausung nach außen zu bewegen.

In Weiterbildung der Erfindung wird die in der Ausschleusrichtung antreibbare Produktablage durch wenigstens ein endlos umlaufendes Fördermittel, insbesondere durch wenigstens ein Förderband und/oder wenigstens einen Fördergurt, gebildet (Patentanspruch 11).

Die in der Ausschleusrichtung antreibbare Produktablage kann bearbeitungsproduktseitig derart ausgebildet sein, dass eine Sollausrichtung der in der Ausschleusrichtung bewegten Bearbeitungsprodukte während des Abtransports der Bearbeitungsprodukte aus der Schutzumhausung erhalten bleibt. Beispielsweise kann die Produktablage mit entsprechenden, in der Ausschleusrichtung voneinander beabstandeten Erhebungen versehen sein, zwischen denen die Bearbeitungsprodukte abgelegt sind und die eine unerwünschte Verlagerung der Bearbeitungsprodukte in der Ausschleusrichtung verhindern.

Die Abschirmungswirkung der in der Ausschleusrichtung nachgiebigen Begrenzung der Schutzumhausung kann auch durch die Belegung der Produktablage außerhalb der Schutzumhausung beeinflusst werden. So ist es beispielsweise denkbar, dass eine Überbelegung der Produktablage außerhalb der Schutzumhausung zu einem Rückstau von Bearbeitungsprodukten in das Innere der Schutzumhausung führt und dass die nachgiebige Begrenzung der Schutzumhausung aufgrund des Rückstaus der Bearbeitungsprodukte in eine Position ausgelenkt ist, in welcher nur eine reduzierte Abschirmungswirkung erzielt wird. Aus diesem Grund ist im Falle der Laserbearbeitungsmaschine nach Patentanspruch 12 eine Detektionsvorrichtung vorgesehen, mittels derer die Belegung der Produktablage an der in der Ausschleusrichtung gelegenen Seite der in der Ausschleusrichtung nachgiebigen Begrenzung der Schutzumhausung detektierbar ist. Bei Anbindung der Detektionsvorrichtung an eine Steuerung der Laserbearbeitungsmaschine, insbesondere an eine numerische Maschinensteuerung, besteht beispielsweise die Möglichkeit, dass bei Detektion einer Überbelegung der Produktablage eine automatische Notabschaltung der in dem Bearbeitungsbereich der Maschine angeordneten Laserbearbeitungsvorrichtung vorgenommen wird.

In weiterer Ausgestaltung der erfindungsgemäßen Laserbearbeitungsmaschine weist die Produktablage Ablageelemente, beispielsweise angetrieben bewegbare Förderbänder oder Fördergurte auf, die unter Ausbildung von Zwischenräumen voneinander beabstandet sind. Im Interesse einer wirksamen Abschirmung der Umgebung der Laserbearbeitungsmaschine gegen Laserstrahlung aus dem Bearbeitungsbereich der Maschine sind der oder die Zwischenräume der Ablageelemente mit einer Abdeckung versehen (Patentanspruch 13). Erfindungsgemäß bevorzugt wird eine Abdeckung, die aus einem oder mehreren Abdeckblechen besteht.

Damit die Ablageelemente der Produktablage und das Innere der Schutzumhausung bei Bedarf zugänglich sind, ist die Abdeckung des oder der Zwischenräume der Ablageelemente in weiterer bevorzugter Ausgestaltung der Erfindung lösbar montiert (Patentanspruch 14).

Eine gute Zugänglichkeit des Inneren der Schutzumhausung bzw. des Bearbeitungsbereichs der Laserbearbeitungsmaschine ist in Weiterbildung der Erfindung dadurch sichergestellt, dass wenigstens ein Teil der Erweiterung der Schutzumhausung um eine Schwenkachse in eine Offen- und in eine Geschlossenstellung schwenkbar ist (Patentanspruch 15).

Nachfolgend wird die Erfindung anhand beispielhafter schematischer Darstellungen näher erläutert.

Es zeigen:
- Figur 1: eine Laserbearbeitungsmaschine für die schneidende Rohrbearbeitung mit einer geschlossenen Schutzumhausung und
- Figur 2: die Laserbearbeitungsmaschine gemäß Figur 1 bei teilweise entfernter Schutzumhausung.

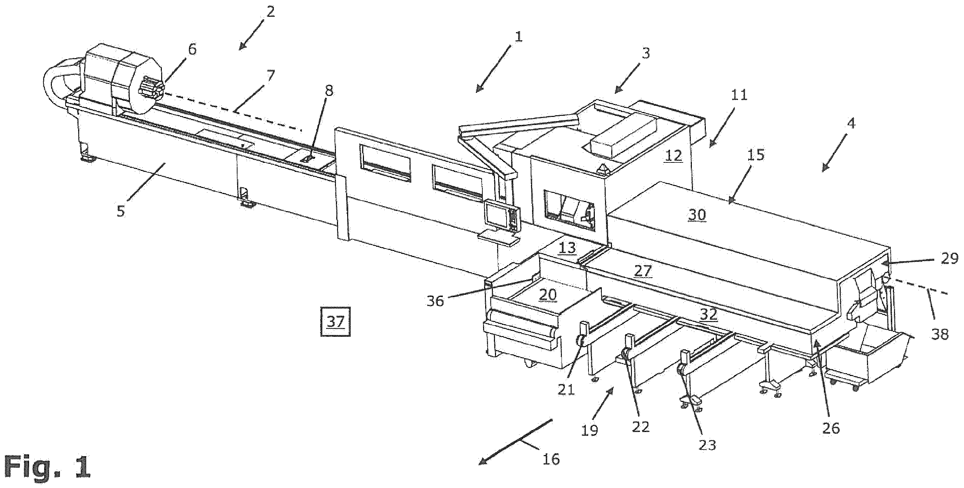

Gemäß Figur 1 weist eine Laserbearbeitungsmaschine 1 für die schneidende Rohrbearbeitung eine Rohrvorschubeinrichtung 2, einen Bearbeitungsbereich 3 sowie eine Entladestation 4 auf.

Die Rohrvorschubeinrichtung 2 ist herkömmlicher Bauart und umfasst ein auf einer Tragstruktur 5 schienengeführtes Spannfutter 6, das automatisiert längs der Tragstruktur 5 verfahren kann. Das Spannfutter 6 dient in bekannter Weise zur Fixierung des hinteren Endes eines zu bearbeitenden Werkstücks in Form eines Rohres 7. Das Rohr 7 ist in Figur 1 durch eine gestrichelte Rohrachse angedeutet. Zwischen dem Spannfutter 6 und dem Bearbeitungsbereich 3 ist das zu bearbeitende Rohr 7 auf beladeseitigen Rohrunterstützungen 8 gelagert. In Figur 1 ist eine der beladeseitigen Rohrunterstützungen 8 zu erkennen und in einer Position gezeigt, in welcher die beladeseitige Rohrunterstützung 8 in die Tragstruktur 5 der Rohrvorschubeinrichtung 2 versenkt ist und folglich von dem Spannfutter 6 längs der Tragstruktur 5 überfahren werden kann. Durch Zustellbewegungen des Spannfutters 6 wird das Rohr 7 in axialer Richtung abschnittweise in den Bearbeitungsbereich 3 der Laserbearbeitungsmaschine 1 vorgeschoben.

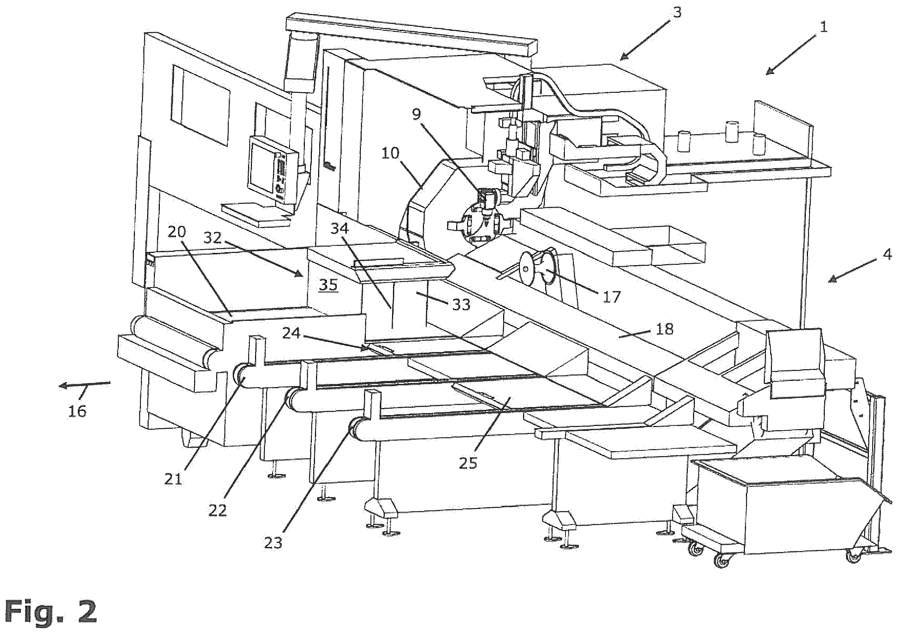

In dem Bearbeitungsbereich 3 ist ausweislich Figur 2 als Laserbearbeitungsvorrichtung ein mehrachsig beweglicher Laserschneidkopf 9 vorgesehen. Im Betrieb emittiert der Laserschneidkopf 9 in bekannter Weise einen Laserstrahl, welcher das Rohr 7 an einer Bearbeitungsstelle trennend bearbeitet. In unmittelbarer Nähe der Bearbeitungsstelle wird das Rohr 7 während der Bearbeitung mittels einer Lünette 10 gelagert. Die Lünette 10 stützt das Rohr 7 in radialer Richtung ab und erlaubt außerdem eine Drehbewegung des Rohres 7 um die Rohrachse. Um das Rohr 7 über seinen gesamten Umfang mit dem Laserbearbeitungsstrahl erreichen zu können, besteht die Möglichkeit, das Rohr 7 mittels des Spannfutters 6 um seine Achse zu drehen.

Zur Abschirmung der Umgebung der Laserbearbeitungsmaschine 1 gegen Laserstrahlung aus dem Bearbeitungsbereich 3 ist für den Bearbeitungsbereich 3 eine Schutzumhausung 11 vorgesehen.

Gemäß Figur 1 ist die Schutzumhausung 11 der Laserbearbeitungsmaschine 1 mehrteilig ausgebildet.

Der Laserschneidkopf 9 und die Lünette 10 sind in einer Arbeitsraumkabine 12 der Schutzumhausung 11 untergebracht. Die Wand der Arbeitsraumkabine 12 weist an der zu der Rohrvorschubeinrichtung 2 hin weisenden Seite eine nicht gezeigte Eintrittsöffnung auf, durch welche das zu bearbeitende Rohr 7 mittels der Rohrvorschubeinrichtung 2 in Vorschubrichtung in das Innere der Arbeitsraumkabine 12 bewegt und bei fortschreitender Rohrbearbeitung gegenüber dem Laserschneidkopf 9 in der Vorschubrichtung nachgesetzt wird.

Entladeseitig weist die Schutzumhausung 11 einen schneidkopfnahen feststehenden Umhausungsteil 13 sowie eine neben dem feststehenden Umhausungsteil 13 angeordnete Schwenkhaube 15 auf.

An dem schneidkopfnahen feststehenden Umhausungsteil 13 werden kurze Rohrabschnitte, die an der Bearbeitungsstelle des Laserschneidkopfs 9 durch schneidende Bearbeitung des Rohres 7 als Bearbeitungsprodukte erzeugt werden, in einer senkrecht zu der Vorschubrichtung des Rohres 7 verlaufenden und in Figur 1 durch einen Pfeil 16 veranschaulichten Ausschleusrichtung aus der Schutzumhausung 11 abgeführt. Durch den Laserschneidkopf 9 als Bearbeitungsprodukte erzeugte Rohrabschnitte größerer Länge sind bereits während der schneidenden Rohrbearbeitung an der von der Rohrvorschubeinrichtung 2 abliegenden Seite des Laserschneidkopfs 9 auf entladeseitigen Rohrunterstützungen 17 gelagert, von denen in Figur 2 eine dargestellt ist.

Die in Figur 2 erkennbare entladeseitige Rohrunterstützung 17 ist unter der Schwenkhaube 15 angeordnet. Der von der entladeseitigen Rohrunterstützung 17 unterfangene Teil des zu bearbeitenden Rohres 7 ragt an der Entladeseite der Arbeitsraumkabine 12 durch eine entladeseitige Wandöffnung in den Raum unter der Schwenkhaube 15 vor.

Auch die Rohrabschnitte, die aufgrund ihrer Länge bei Erstellen des finalen Trennschnitts durch den Laserschneidkopf 9 unter der Schwenkhaube 15 angeordnet sind, verlassen die Schutzumhausung 11 in der Ausschleusrichtung 16.

Unabhängig von ihrer Länge gelangen die mittels des Laserschneidkopfs 9 erzeugten Rohrabschnitte nach dem finalen Trennschnitt zunächst unter Schwerkraftwirkung auf eine schiefe Ebene in Form einer Abführschräge 18. Die Abführschräge 18 erstreckt sich in der Ausschleusrichtung 16 und überbrückt in vertikaler Richtung einen Zwischenraum zwischen einem Bearbeitungsniveau, auf welchem sich das von dem restlichen Rohr 7 abgetrennte Bearbeitungsprodukt bei seiner Erzeugung befindet und dem Niveau einer Produktablage 19.

Die Produktablage 19 umfasst in dem dargestellten Beispielsfall Ablageelemente in Form eines Förderbandes 20 sowie in Form von Fördergurten 21, 22, 23. Bei dem Förderband 20 und den Fördergurten 21, 22, 23 handelt es sich um in der Ausschleusrichtung 16 angetriebene und endlos umlaufende Fördermittel. In der Vorschubrichtung des Rohres 7 sind das Förderband 20 und die Fördergurte 21, 22, 23 unter Ausbildung von Zwischenräumen voneinander beabstandet. Zur bodenseitigen Abschirmung der Umgebung der Laserbearbeitungsmaschine 1 gegen Laserstrahlung aus dem Bearbeitungsbereich 3 dient im Bereich der Produktablage 19 eine Abdeckung 24 aus Abdeckblechen 25, die zwischen dem Förderband 20 und den Fördergurten 21, 22, 23 angeordnet sind. Die Abdeckung 24 bildet dementsprechend einen Teil der Schutzumhausung 11.

Von der Schutzumhausung 11 wird die Produktablage 19 mit einer ablageseitigen Stufe 26 der Schutzumhausung 11 in der Ausschleusrichtung 16 überdeckt.

Bei der ablageseitigen Stufe 26 handelt es sich um eine in vertikaler Richtung unterhalb der Bearbeitungsstelle des Laserschneidkopfs 9 angeordnete und sich in der Ausschleusrichtung 16 erstreckende Erweiterung der Schutzumhausung 11, wobei die ablageseitige Stufe 26 in dem dargestellten Beispielsfall von dem schneidkopfnahen feststehenden Umhausungsteil 13 und einer unteren Stufe 27 der Schwenkhaube 15 gebildet wird.

In Gegenrichtung der Ausschleusrichtung 16 schließt sich an die ablageseitige Stufe 26 der Schutzumhausung 11 eine bearbeitungsseitige Stufe 29 der treppenartig ausgebildeten Schutzumhausung 11 an. Die bearbeitungsseitige Stufe 29 der Schutzumhausung 11 umfasst den oberhalb der ablageseitigen Stufe 26 angeordneten Teil der Arbeitsraumkabine 12 und eine obere Stufe 30 der Schwenkhaube 15.

Die ablageseitige Stufe 26 der Schutzumhausung 11 weist an einem senkrecht zu der Produktablage 19 verlaufenden Stufenteil eine in der Ausschleusrichtung 16 nachgiebige Begrenzung 32 auf, die sich längs der Vorschubrichtung des Rohres 7 über die gesamte Länge des schneidkopfnahen feststehenden Umhausungsteils 1 und der Schwenkhaube 15 erstreckt. Jedem dieser Teile der Schutzumhausung 11 ist ein Teil der in der Ausschleusrichtung 16 nachgiebigen Begrenzung 32 zugeordnet.

Wie aus Figur 2 hervorgeht, ist die nachgiebige Begrenzung 32 mehrlagig, in dem dargestellten Beispielsfall dreilagig ausgebildet. Die nachgiebige Begrenzung 32 weist über ihre gesamte Länge drei in der Ausschleusrichtung 16 gegeneinander versetzte, vorhangartige Begrenzungselemente 33, 34, 35 auf. Jedes der Begrenzungselemente 33, 34, 35 verläuft senkrecht zu der Ausschleusrichtung 16 und damit parallel zu der Vorschubrichtung des Rohres 7. Die Ausbildung der nachgiebigen Begrenzung 32 an der Schwenkhaube 15 entspricht der Ausbildung des in Figur 2 gezeigten Teils der nachgiebigen Begrenzung 32 an dem schneidkopfnahen feststehenden Umhausungsteil 13.

Zu dem bearbeitungsseitigen Begrenzungselement 33 gelangt ein durch schneidende Bearbeitung des Rohres 7 erstellter Rohrabschnitt unter Schwerkraftwirkung über die Abführschräge 18. Die Abführschräge 18 dient gleichzeitig als Justiervorrichtung, mittels derer der aus der Schutzumhausung 11 abzuführende Rohrabschnitt mit einer Sollausrichtung, im vorliegenden Fall parallel, gegenüber der nachgiebigen Begrenzung 32 ausgerichtet wird. Eine entsprechende Ausrichtbewegung führen Rohrabschnitte an dem Übergang zwischen der Abführschräge 18 und der horizontalen Produktablage 19 aus.

In Abhängigkeit von der Länge des erzeugten Rohrabschnitts wird der an der Bearbeitungsseite des Begrenzungselements 33 ankommende Rohrabschnitt durch das Förderband 20 oder durch zumindest zwei der Fördergurte 21, 22, 23 in der Ausschleusrichtung 16 bewegt. Bei seiner Bewegung in der Ausschleusrichtung 16 passiert der Rohrabschnitt zunächst das Begrenzungselement 33, das zu diesem Zweck aus seiner vertikalen Ausgangsposition in der Ausschleusrichtung 16 ausgelenkt wird. Das Begrenzungselement 33 führt dabei gegen die Wirkung einer elastischen Rückstellkraft eine Schwenkbewegung um seine Befestigung an dem starren Teil der Wand der Schutzumhausung 11 aus.

Aufgrund einer entsprechenden Bemessung des Abstandes zwischen den einzelnen Begrenzungselementen 33, 34, 35 werden die Begrenzungselemente 33, 34, 35 von dem Rohrabschnitt nacheinander passiert. Der gegenseitige Abstand der Begrenzungselemente 33, 34, 35 in der Ausschleusrichtung 16 ist variabel einstellbar. Zu diesem Zweck ist wenigstens ein Teil der Begrenzungselemente 33, 34, 35 lösbar und in der Ausschleusrichtung 16 umsetzbar an dem starren Teil der Wand der Schutzumhausung 11 befestigt.

Noch ehe ein in der Ausschleusrichtung 16 bewegter Rohrabschnitt das Begrenzungselement 34 aus der vertikalen Ausgangsstellung in der Ausschleusrichtung schwenken kann, ist das zuvor von dem Rohrabschnitt passierte Begrenzungselement 33 wieder in seine vertikale Ausgangsstellung zurückgekehrt. Entsprechend stellen sich die Verhältnisse dar, wenn der aus der Schutzumhausung 11 abzuführende Rohrabschnitt das Begrenzungselement 35 passiert.

Damit die Begrenzungselemente 33, 34, 35 die beschriebenen Auslenk- und Rückstellbewegungen ungehindert ausführen können, sind die Begrenzungselemente 33, 34, 35 an ihrem unteren Ende jeweils geringfügig von der Produktablage 19 beabstandet. Aufgrund der Elastizität des Materials der Begrenzungselemente 33, 34, 35 führen diese die Rückstellbewegungen selbsttätig aus. Sofern dadurch eine ausreichende Nachgiebigkeit der Begrenzungselemente 33, 34, 35 in der Ausschleusrichtung 16 nicht gefährdet wird, ist es auch denkbar, die Begrenzungselemente 33, 34, 35 auf der Produktablage 19 aufsetzen zu lassen.

Im Bereich des schneidkopfnahen feststehenden Umhausungsteils 13 wird die Belegung der Produktablage 19 bzw. des Förderbands 20 mit abzuführenden Rohrabschnitten mittels einer Detektionsvorrichtung überwacht. Als Detektionsvorrichtung ist in dem dargestellten Beispielsfall eine Lichtschranke 36 vorgesehen.

Detektiert die Lichtschranke 36 auf dem Förderband 20 einen Rückstau von Rohrabschnitten, der zu einem unerwünschten Öffnen der in der Ausschleusrichtung 16 nachgiebigen Begrenzung 32 führen könnte, so wird der Laserschneidkopf 9 im Innern der Schutzumhausung 11 durch Abschalten eines nicht gezeigten und den Laserschneidkopf 9 mit Laserstrahlung versorgenden Lasergenerators automatisch stillgesetzt. Zu diesem Zweck steht die Lichtschranke 36 mit einer in Figur 1 andeutungsweise dargestellten numerischen Steuerung 37 in Verbindung, die ihrerseits an den Lasergenerator angebunden ist und die sämtliche Funktionen der Laserbearbeitungsmaschine 1 steuert.

Damit das Innere der Schutzumhausung 11 zugänglich ist, kann die Schwenkhaube 15 einschließlich des zugehörigen Teils der in der Ausschleusrichtung 16 nachgiebigen Begrenzung 32 um eine in Figur 1 strichpunktiert dargestellte Schwenkachse 38 in eine Offen- und in eine Geschlossenstellung geschwenkt werden. Zur Schwenkbetätigung der Schwenkhaube 15 dient dabei ein nicht gezeigter pneumatischer Schwenkmechanismus herkömmlicher Bauart. Andersartige Schwenkantriebe für die Schwenkhaube 15, beispielsweise Schwenkantriebe mit Elektrozylindern, sind denkbar.

Bei Bedarf besteht überdies die Möglichkeit, die zwischen dem Förderband 20 und den Fördergurten 21, 22, 23 vorgesehenen Abdeckbleche 25 der Abdeckung 24 zu entfernen. Zu diesem Zweck sind die Abdeckbleche 25 lösbar an der Tragstruktur des Förderbandes 20 und der Fördergurte 21, 22, 23 montiert.

## Patentansprüche

1. Laserbearbeitungsmaschine
• mit einem Bearbeitungsbereich (3), der eine Schutzumhausung (11) aufweist,
• mit einer in dem Bearbeitungsbereich (3) angeordneten Laserbearbeitungsvorrichtung (9), mittels derer an einer Bearbeitungsstelle ein in dem Bearbeitungsbereich (3) angeordnetes Werkstück (7) unter Emission von Laserstrahlung bearbeitbar ist, gegen welche die Umgebung des Bearbeitungsbereichs (3) mittels der Schutzumhausung (11) abgeschirmt ist, wobei durch die Bearbeitung des Werkstücks (7) ein Bearbeitungsprodukt erzeugbar ist, das in einer Ausschleusrichtung (16) bewegbar und dadurch aus der Schutzumhausung (11) abführbar ist, indem die Schutzumhausung (11) eine Begrenzung (32) aufweist, die in der Ausschleusrichtung (16) nachgiebig und dadurch von dem in der Ausschleusrichtung (16) bewegten Bearbeitungsprodukt passierbar ist sowie
• mit einer Produktablage (19) zum Lagern des Bearbeitungsprodukts, die in vertikaler Richtung unterhalb der Bearbeitungsstelle angeordnet ist und die sich in der Ausschleusrichtung (16) erstreckt,
**dadurch gekennzeichnet, dass**
die Schutzumhausung (11) sich in vertikaler Richtung unterhalb der Bearbeitungsstelle unter Ausbildung einer Erweiterung (26) in der Ausschleusrichtung (16) erweitert und sich mit der Erweiterung (26) über die Produktablage (19) erstreckt, wobei die in der Ausschleusrichtung (16) nachgiebige Begrenzung (32) der Schutzumhausung (11) die Erweiterung (26) der Schutzumhausung (11) in der Ausschleusrichtung (16) begrenzt und in vertikaler Richtung oberhalb der Produktablage (19) angeordnet ist, vorzugsweise der Produktablage (19) unmittelbar benachbart ist.

2. Laserbearbeitungsmaschine nach Anspruch 1, **dadurch gekennzeichnet, dass** die Schutzumhausung (11) sich unter Ausbildung der Erweiterung (26) in der Ausschleusrichtung (16) erweitert, indem die Schutzumhausung (11) an der in der Ausschleusrichtung (16) gelegenen Seite treppenartig ausgebildet ist, mit einer der Produktablage (19) in vertikaler Richtung benachbarten ablageseitigen Stufe, die an einem senkrecht zu der Produktablage (19) verlaufenden Stufenteil die in der Ausschleusrichtung (16) nachgiebige Begrenzung (32) der Schutzumhausung (11) aufweist sowie mit einer in vertikaler Richtung oberhalb der ablageseitigen Stufe angeordneten bearbeitungsseitigen Stufe (29), die gegenüber der ablageseitigen Stufe in Gegenrichtung der Ausschleusrichtung (16) versetzt ist.

3. Laserbearbeitungsmaschine nach einem der vorhergehenden Ansprüche, **dadurch gekennzeichnet, dass** die in der Ausschleusrichtung (16) nachgiebige Begrenzung (32) der Schutzumhausung (11) mehrlagig ausgebildet ist, indem die in der Ausschleusrichtung (16) nachgiebige Begrenzung (32) der Schutzumhausung (11) mehrere senkrecht zu der Ausschleusrichtung (16) verlaufende und in der Ausschleusrichtung (16) gegeneinander versetzte Begrenzungselemente (33, 34, 35) aufweist, die in der Ausschleusrichtung (16) nachgiebig und dadurch von dem in der Ausschleusrichtung (16) bewegten Bearbeitungsprodukt passierbar sind.

4. Laserbearbeitungsmaschine nach Anspruch 3, **dadurch gekennzeichnet, dass** wenigstens zwei der Begrenzungselemente (33, 34, 35) in der Ausschleusrichtung (16) mit einem gegenseitigen Abstand gegeneinander versetzt sind, der zumindest ebenso groß ist wie die Abmessung, welche das in der Ausschleusrichtung (16) bewegte Bearbeitungsprodukt in der Ausschleusrichtung (16) aufweist.

5. Laserbearbeitungsmaschine nach Anspruch 3 oder Anspruch 4, **dadurch gekennzeichnet, dass** wenigstens zwei der Begrenzungselemente (33, 34, 35) unter Veränderung ihres gegenseitigen Abstandes in der Ausschleusrichtung (16) relativ zueinander zustellbar sind.

6. Laserbearbeitungsmaschine nach einem der vorhergehenden Ansprüche, **dadurch gekennzeichnet, dass** an der in Gegenrichtung der Ausschleusrichtung (16) gelegenen Seite der in der Ausschleusrichtung (16) nachgiebigen Begrenzung (32) der Schutzumhausung (11) eine Justiervorrichtung (18) vorgesehen ist, mittels derer das in der Ausschleusrichtung (16) bewegte Bearbeitungsprodukt mit einer Sollausrichtung gegenüber der in der Ausschleusrichtung (16) nachgiebigen Begrenzung (32) der Schutzumhausung (11) ausrichtbar ist.

7. Laserbearbeitungsmaschine nach Anspruch 6 und nach einem der Ansprüche 3 bis 5, **dadurch gekennzeichnet, dass** das in der Ausschleusrichtung (16) bewegte Bearbeitungsprodukt mittels der Justiervorrichtung (18) gegenüber der in der Ausschleusrichtung (16) nachgiebigen Begrenzung (32) der Schutzumhausung (11) mit einer Sollausrichtung ausrichtbar ist, aufgrund derer das Bearbeitungsprodukt die in der Ausschleusrichtung (16) gegeneinander versetzten Begrenzungselemente (33, 34, 35) nacheinander in der Ausschleusrichtung (16) passiert.

8. Laserbearbeitungsmaschine nach Anspruch 6 oder Anspruch 7, **dadurch gekennzeichnet, dass** das in der Ausschleusrichtung (16) bewegte Bearbeitungsprodukt mittels der Justiervorrichtung (18) mit einer Sollausrichtung parallel zu der in der Ausschleusrichtung (16) nachgiebigen Begrenzung (32) der Schutzumhausung (11) oder parallel zu den in der Ausschleusrichtung (16) gegeneinander versetzten Begrenzungselementen (33, 34, 35) ausrichtbar ist, wobei die Begrenzungselemente (33, 34, 35) parallel zueinander senkrecht zu der Ausschleusrichtung (16) verlaufen.

9. Laserbearbeitungsmaschine nach einem der Ansprüche 6 bis 8, **dadurch gekennzeichnet, dass** die Justiervorrichtung (18) eine schiefe Ebene aufweist, die sich zwischen der Produktablage (19) und einem Bearbeitungsniveau, auf welchem das Bearbeitungsprodukt bei der Erzeugung in vertikaler Richtung oberhalb der Produktablage (19) angeordnet ist, in der Ausschleusrichtung (16) erstreckt.

10. Laserbearbeitungsmaschine nach einem der vorhergehenden Ansprüche, **dadurch gekennzeichnet, dass** die Produktablage (19) in der Ausschleusrichtung (16) antreibbar ist und dass das Bearbeitungsprodukt mittels der angetriebenen Produktablage (19) unter Passieren der in der Ausschleusrichtung (16) nachgiebigen Begrenzung (32) der Schutzumhausung (11) in der Ausschleusrichtung (16) bewegbar ist.

11. Laserbearbeitungsmaschine nach Anspruch 10, **dadurch gekennzeichnet, dass** die in der Ausschleusrichtung (16) antreibbare Produktablage (19) durch wenigstens ein endlos umlaufendes Fördermittel, insbesondere durch wenigstens ein Förderband (20) und/oder wenigstens einen Fördergurt (21, 22, 23), gebildet ist.

12. Laserbearbeitungsmaschine nach einem der vorhergehenden Ansprüche, **dadurch gekennzeichnet, dass** eine Detektionsvorrichtung (36) vorgesehen ist, mittels derer die Belegung der Produktablage (19) an der in der Ausschleusrichtung (16) gelegenen Seite der in der Ausschleusrichtung (16) nachgiebigen Begrenzung (32) der Schutzumhausung (11) detektierbar ist.

13. Laserbearbeitungsmaschine nach einem der vorhergehenden Ansprüche, **dadurch gekennzeichnet, dass** die Produktablage (19) Ablageelemente aufweist, die unter Ausbildung wenigstens eines Zwischenraums voneinander beabstandet sind und dass der oder die Zwischenräume der Ablageelemente mit einer Abdeckung (24) versehen sind.

14. Laserbearbeitungsmaschine nach Anspruch 13, **dadurch gekennzeichnet, dass** die Abdeckung (24) des oder der Zwischenräume der Ablageelemente lösbar montiert ist.

15. Laserbearbeitungsmaschine nach einem der vorhergehenden Ansprüche, **dadurch gekennzeichnet, dass** wenigstens ein Teil der Erweiterung (26) der Schutzumhausung (11) um eine Schwenkachse (38) in eine Offen- und in eine Geschlossenstellung schwenkbar ist.

## Claims

1. Laser processing machine
• having a processing area (3) which has a protective housing (11),
• having a laser processing device (9) which is arranged in the processing area (3) and by means of which a workpiece (7) which is arranged in the processing area (3) can be processed at a processing location with the emission of laser radiation, against which the environment of the processing area (3) is shielded by means of the protective housing (11), wherein there can be produced as a result of the processing of the workpiece (7) a processing product which can be moved in a discharge direction (16) and which can thereby be discharged from the protective housing (11) by the protective housing (11) having a boundary (32) which is flexible in the discharge direction (16) and which can thereby be passed by the processing product which is moved in the discharge direction (16) and
• having for storing the processing product a product rest (19) which is arranged in a vertical direction below the processing location and which extends in the discharge direction (16),
**characterised in that**
the protective housing (11) expands, in a vertical direction below the processing location, with an expansion (26) being formed in the discharge direction (16) and extends with the expansion (26) over the product rest (19), wherein the boundary (32) of the protective housing (11), which boundary is flexible in the discharge direction (16), limits the expansion (26) of the protective housing (11) in the discharge direction (16) and is arranged in a vertical direction above the product rest (19), preferably directly adjacent to the product rest (19).

2. Laser processing machine according to claim 1, **characterised in that** the protective housing (11) expands in the discharge direction (16) with the expansion (26) being formed by the protective housing (11) being constructed in a stepped manner at the side located in the discharge direction (16), having a rest-side step which is adjacent to the product rest (19) in a vertical direction and which has on a step portion which extends perpendicularly to the product rest (19) the boundary (32) of the protective housing (11) which boundary is flexible in the discharge direction (16) and having a processing-side step (29) which is arranged in a vertical direction above the rest-side step and which is offset with respect to the rest-side step in the opposite direction to the discharge direction (16).

3. Laser processing machine according to any one of the preceding claims, **characterised in that** the boundary (32) of the protective housing (11) which boundary is flexible in the discharge direction (16) is constructed in several layers by the boundary (32) of the protective housing (11) which boundary is flexible in the discharge direction (16) having a plurality of boundary elements (33, 34, 35) which extend perpendicularly to the discharge direction (16) and which are offset with respect to each other in the discharge direction (16) and which are flexible in the discharge direction (16) and which can thereby be passed by the processing product which is moved in the discharge direction (16).

4. Laser processing machine according to claim 3, **characterised in that** at least two of the boundary elements (33, 34, 35) are offset with respect to each other in the discharge direction (16) with a mutual distance which is at least as large as the dimension which the processing product which is moved in the discharge direction (16) has in the discharge direction (16).

5. Laser processing machine according to claim 3 or claim 4, **characterised in that** at least two of the boundary elements (33, 34, 35) can be positioned relative to each other with the mutual distance thereof being changed in the discharge direction (16).

6. Laser processing machine according to any one of the preceding claims, **characterised in that** at the side of the boundary (32) of the protective housing (11), which side is located in the opposite direction to the discharge direction (16), there is provided an adjusting device (18) by means of which the processing product which is moved in the discharge direction (16) can be orientated with a desired orientation with respect to the boundary (32) of the protective housing (11) which is flexible in the discharge direction (16).

7. Laser processing machine according to claim 6 and according to any one of claims 3 to 5, **characterised in that** the processing product which is moved in the discharge direction (16) can be orientated by means of the adjusting device (18) with respect to the boundary (32) of the protective housing (11) which is flexible in the discharge direction (16) with a desired orientation, due to which the processing product passes the boundary elements (33, 34, 35), which are offset with respect to each other in the discharge direction (16), one after the other in the discharge direction (16).

8. Laser processing machine according to claim 6 or claim 7, **characterised in that** the processing product which is moved in the discharge direction (16) can be orientated by means of the adjusting device (18) with a desired orientation parallel with the boundary (32) of the protective housing (11) which is flexible in the discharge direction (16) or parallel with the boundary elements (33, 34, 35) which are offset with respect to each other in the discharge direction (16), wherein the boundary elements (33, 34, 35) extend parallel with each other perpendicularly to the discharge direction (16).

9. Laser processing machine according to any one of claims 6 to 8, **characterised in that** the adjusting device (18) has an inclined plane which extends in the discharge direction (16) between the product rest (19) and a processing level on which the processing product is arranged during the production in a vertical direction above the product rest (19).

10. Laser processing machine according to any one of the preceding claims, **characterised in that** the product rest (19) can be driven in the discharge direction (16) and **in that** the processing product can be moved in the discharge direction (16) by means of the driven product rest (19) with the processing product passing the boundary (32) of the protective housing (11) which is flexible in the discharge direction.

11. Laser processing machine according to claim 10, **characterised in that** the product rest (19) which can be driven in the discharge direction (16) is formed by at least one circulating endless conveying means, in particular by at least one conveyor band (20) and/or at least one conveyor belt (21, 22, 23).

12. Laser processing machine according to any one of the preceding claims, **characterised in that** there is provided a detection device (36) by means of which the occupation of the product rest (19) can be detected at the side of the boundary (32) of the protective housing (11) which is flexible in the discharge direction, which side is located in the discharge direction (16).

13. Laser processing machine according to any one of the preceding claims, **characterised in that** the product rest (19) has store elements which are spaced apart from each other with at least one intermediate space being formed and **in that** the intermediate space(s) of the store elements is/are provided with a cover (24).

14. Laser processing machine according to claim 13, **characterised in that** the cover (24) of the intermediate space(s) of the store elements is releasably mounted.

15. Laser processing machine according to any one of the preceding claims, **characterised in that** at least a portion of the expansion (26) of the protective housing (11) can be pivoted about a pivot axis (38) into an open position and into a closed position.

## Revendications

1. Machine d'usinage au laser
• avec une zone d'usinage (3) qui présente un carter de protection (11),
• avec un dispositif d'usinage au laser (9) disposé dans la zone d'usinage (3), au moyen duquel une pièce (7) disposée dans la zone d'usinage (3) peut être usinée à un poste d'usinage avec émission d'un rayonnement laser contre lequel l'environnement de la zone d'usinage (3) est protégé au moyen du carter de protection (11), l'usinage de la pièce (7) pouvant produire un produit d'usinage qui peut être déplacé dans une direction de décharge (16) et ainsi être évacué du carter de protection (11), le carter de protection (11) présentant une délimitation (32) qui est flexible dans la direction de décharge (16) et peut ainsi être franchie par le produit d'usinage déplacé dans la direction de décharge (16), et
• avec un récepteur de produits (19) pour stocker le produit d'usinage, qui est disposé sous le poste d'usinage dans la direction verticale et qui s'étend dans la direction de décharge (16),
**caractérisée en ce que**
le carter de protection (11) s'étend, dans la direction verticale, sous le poste d'usinage en formant un élargissement (26) dans la direction de décharge (16) et s'étend avec l'élargissement (26) au-dessus du récepteur de produits (19), la délimitation (32) du carter de protection (11) flexible dans la direction de décharge (16) limitant l'élargissement (26) du carter de protection (11) dans la direction de décharge (16) et étant, dans la direction verticale, disposée au-dessus du récepteur de produits (19), de préférence au voisinage immédiat du récepteur de produits (19).

2. Machine d'usinage au laser selon la revendication 1, **caractérisée en ce que** le carter de protection (11) s'élargit dans la direction de décharge (16) en formant l'élargissement (26), le carter de protection (11) étant réalisé en forme d'escalier sur le côté situé dans la direction de décharge (16), avec une marche côté récepteur qui est adjacente au récepteur de produits (19) dans la direction verticale, laquelle présente, sur une partie de marche s'étendant perpendiculairement au récepteur de produits (19), la délimitation (32) du carter de protection (11) flexible dans la direction de décharge (16) ainsi qu'avec une marche (29) côté usinage, qui est disposée, dans la direction verticale, au-dessus de la marche côté récepteur et qui est décalée par rapport à la marche côté récepteur dans la direction opposée à la direction de décharge (16).

3. Machine d'usinage au laser selon l'une des revendications précédentes, **caractérisée en ce que** la délimitation (32) du carter de protection (11) flexible dans la direction de décharge (16) est réalisée en plusieurs couches, la délimitation (32) du carter de protection (11) flexible dans la direction de décharge (16) présentant plusieurs éléments de délimitation (33, 34, 35) qui s'étendent perpendiculairement à la direction de décharge (16) et sont décalés les uns par rapport aux autres dans la direction de décharge (16), qui sont flexibles dans la direction de décharge (16) et peuvent ainsi être franchis par le produit d'usinage déplacé dans la direction de décharge (16).

4. Machine d'usinage au laser selon la revendication 3, **caractérisée en ce qu'**au moins deux des éléments de délimitation (33, 34, 35) sont décalés l'un par rapport à l'autre dans la direction de décharge (16) avec un espacement mutuel qui est au moins aussi grand que la dimension que le produit d'usinage déplacé dans la direction de décharge (16) présente dans la direction de décharge (16).

5. Machine d'usinage au laser selon la revendication 3 ou la revendication 4, **caractérisée en ce qu'**au moins deux des éléments de délimitation (33, 34, 35) peuvent être positionnés l'un par rapport à l'autre dans la direction de décharge (16) en modifiant leur espacement mutuel.

6. Machine d'usinage au laser selon l'une des revendications précédentes, **caractérisée en ce qu'**un dispositif de réglage (18) est prévu sur le côté de la délimitation (32) du carter de protection (11) flexible dans la direction de décharge (16) qui est situé dans la direction opposée à la direction de décharge (16), au moyen duquel le produit d'usinage déplacé dans la direction de décharge (16) peut être orienté dans une orientation de consigne par rapport à la délimitation (32) du carter de protection (11) flexible dans la direction de décharge (16).

7. Machine d'usinage au laser selon la revendication 6 et selon l'une des revendications 3 à 5, **caractérisée en ce que** le produit d'usinage déplacé dans la direction de décharge (16) peut être orienté au moyen du dispositif de réglage (18) dans une orientation de consigne par rapport à la délimitation (32) du carter de protection (11) flexible dans la direction de décharge (16), grâce à laquelle le produit d'usinage franchit successivement dans la direction de décharge (16) les éléments de délimitation (33, 34, 35) décalés les uns par rapport aux autres dans la direction de décharge (16).

8. Machine d'usinage au laser selon la revendication 6 ou la revendication 7, **caractérisée en ce que** le produit d'usinage déplacé dans la direction de décharge (16) peut être orienté au moyen du dispositif de réglage (18) dans une orientation de consigne parallèle à la délimitation (32) du carter de protection (11) flexible dans la direction de décharge (16) ou parallèle aux éléments de délimitation (33, 34, 35) décalés les uns par rapport aux autres dans la direction de décharge (16), les éléments de délimitation (33, 34, 35) s'étendant parallèlement les uns aux autres et perpendiculairement à la direction de décharge (16).

9. Machine d'usinage au laser selon l'une des revendications 6 à 8, **caractérisée en ce que** le dispositif de réglage (18) présente un plan incliné qui s'étend dans la direction de décharge (16) entre le récepteur de produits (19) et un niveau d'usinage sur lequel le produit d'usinage est disposé, dans la direction verticale, au-dessus du récepteur de produits (19) lors de la production.

10. Machine d'usinage au laser selon l'une des revendications précédentes, **caractérisée en ce que** le récepteur de produits (19) peut être entraîné dans la direction de décharge (16) et que le produit d'usinage peut être déplacé dans la direction de décharge (16) au moyen du récepteur de produits entraîné (19), en franchissant la délimitation (32) du carter de protection (11) flexible dans la direction de décharge (16).

11. Machine d'usinage au laser selon la revendication 10, **caractérisée en ce que** le récepteur de produits (19) pouvant être entraîné dans la direction de décharge (16) est formé par au moins un moyen de transport circulant sans fin, en particulier par au moins une bande transporteuse (20) et/ou au moins une courroie transporteuse (21, 22, 23).

12. Machine d'usinage au laser selon l'une des revendications précédentes, **caractérisée en ce qu'**il est prévu un dispositif de détection (36) au moyen duquel l'occupation du récepteur de produits (19) peut être détectée sur le côté, situé dans la direction de décharge (16), de la délimitation (32) du carter de protection (11) flexible dans la direction de décharge (16).

13. Machine d'usinage au laser selon l'une des revendications précédentes, **caractérisée en ce que** le récepteur de produits (19) présente des éléments récepteurs qui sont espacés les uns des autres en formant au moins un espace intermédiaire et que le ou les espaces intermédiaires des éléments récepteurs sont pourvus d'un couvercle (24).

14. Machine d'usinage au laser selon la revendication 13, **caractérisée en ce que** le couvercle (24) du ou des espaces intermédiaires des éléments récepteurs est monté de manière amovible.

15. Machine d'usinage au laser selon l'une des revendications précédentes, **caractérisée en ce qu'**au moins une partie de l'élargissement (26) du carter de protection (11) peut pivoter autour d'un axe de pivotement (38) dans une position ouverte et une position fermée.
